Europäisches Patentamt

European Patent Office

Office européen des brevets

(19)

(11) Veröffentlichungsnummer : **0 150 044**
**B1**

(12) **EUROPÄISCHE PATENTSCHRIFT**

(45) Veröffentlichungstag der Patentschrift :
**13.04.88**

(51) Int. Cl.⁴ : **F 15 B 21/00**, F 16 L 55/04,
B 62 D 5/00

(21) Anmeldenummer : **85100420.0**

(22) Anmeldetag : **17.01.85**

(54) Dämpfungsglied für ein hydraulisches System.

(30) Priorität : **23.01.84 US 572793**

(43) Veröffentlichungstag der Anmeldung :
**31.07.85 Patentblatt 85/31**

(45) Bekanntmachung des Hinweises auf die Patenterteilung : **13.04.88 Patentblatt 88/15**

(84) Benannte Vertragsstaaten :
**CH DE FR GB LI**

(56) Entgegenhaltungen :
**DE-C- 968 116**
**GB-A- 2 054 041**
**US-A- 3 134 611**
**US-A- 3 660 979**
**ZEITSCHRIFT "Machine Design", 17. September**
**1970. J.S. Noss "Can You Hear the Hydraulics System**
**?" Gilroy, Calif. Seiten 141-144**

(73) Patentinhaber : **DEERE & COMPANY**
**1 John Deere Road**
**Moline Illinois 61265 (US)**

(72) Erfinder : **Nyquist, Gary Andrew**
**5590 Davenport Raod**
**Dubuque Iowa 52001 (US)**

(74) Vertreter : **Feldmann, Bernhard et al**
**DEERE & COMPANY European Office, Patent Depart-**
**ment Steubenstrasse 36-42 Postfach 503**
**D-6800 Mannheim 1 (DE)**

## Beschreibung

Die Erfindung bezieht sich auf ein Dämpfungsglied für ein hydraulisches System, in dem eine Pumpe mit wenigstens einem Verbraucher über eine Leitung verbunden ist.

Bei hydraulischen Systemen obiger Art wird das Druckmedium schubweise in die Druckleitung gefördert, wodurch Schwingungen bzw. Druckwellen entstehen, die zu starke Geräusche entwickeln, was insbesondere zu Belästigungen und körperlichen Schäden führen kann, wenn derartige Systeme in Fahrzeugen verwendet werden und eine Bedienungsperson diesen Geräuschen ständig ausgesetzt ist. Abhilfe hat man versucht dadurch zu schaffen, daß in solche hydraulische Systeme Dämpfungsglieder eingebaut werden, die die Schwingungen dämpfen bzw. abbauen sollen. So ist es bereits bekannt (US-A-3 660 979), in der Druckleitung eine Kammer vorzusehen, in die der von der Pumpe kommende Abschnitt der Druckleitung über zwei Zweigleitungen führt. Dieses Dämpfungsglied ist in seinem Aufbau sehr aufwendig und führt nur zu begrenzten Erfolgen.

Als weitere Dämpfungsmöglichkeit wurden zwei gegeneinander isolierte Rohrabschnitte vorgeschlagen (US-A-3 134 611), was ebenfalls aufwendig ist. In der Zeitschrift « Machine Design » vom 17. September 1970 wird auf Seite 143 als Dämpfungsglied ein in eine Kammer geführtes Inertanzrohr beschrieben, das eine kürzere Länge als die Kammer aufweist, einen kleineren Durchmesser als die in die Kammer mündenden Zu- und Ableitungen hat und in die Ableitung mündet. Auf Seite 143 derselben Zeitschrift sind noch die sogenannten Quincke Rohre erwähnt, und zwar ein von der Druckleitung senkrecht abstehendes kurzes Resonatorrohr bzw. zwei die Druckleitung unterbrechende, unterschiedliche Längen und kleineren Durchmesser als die Druckleitung aufweisende Zweigrohre. Da aber die Geräuschbildung von der Frequenz der Wellenlängen abhängt, die Frequenz wiederum von der Pumpendrehzahl abhängig ist und vielfach mit der Fahrzeuggeschwindigkeit variiert, wird die Pumpe sehr oft bei Fahrzeuggeschwindigkeiten arbeiten, bei denen die Quincke Rohre keine Wirkung entfalten können.

Die mit der Erfindung zu lösende Aufgabe wird darin gesehen, ein Dämpfungsglied einfacher Bauart zu schaffen, das keine beweglichen Teile aufweist und in der Lage ist, Schwingungen von Druckwellen über einen großen Frequenzbereich zumindest zu dämpfen.

Diese Aufgabe ist nach der Erfindung dadurch gelöst worden, daß die zwei Enden einer schleifenförmigen Leitung an die die Pumpe mit dem Verbraucher verbindende Leitung derart angeschlossen sind, daß die zwei Enden gleichachsig und sich gegenüberliegend angeordnet sind.

Dieses Dämpfungsglied einfachster Bauweise kann Schwingungen über einen sehr großen Frequenzbereich dämpfen bzw. ganz eliminieren und bewirkt bei einem Einbau in Fahrzeugen, daß der Fahrzeugführer weniger Belästigungen ausgesetzt ist. Obwohl der Einsatz in Fahrzeugen die bevorzugte Anwendungsart ist, können derartige Dämpfungsglieder gleichwohl in stationären Systemen verwendet werden. Der erfindungsgemäße Anschluß der schleifenförmigen Leitung macht es möglich, daß die Enden der Leitung sich gegenüberliegend zueinander offen sind und so in einfacher Weise die Schwingungen absorbieren können.

In vorteilhafter Weise können die Enden der schleifenförmigen Leitung an den sich gegenüberliegenden Anschlußstücken eines Kreuzrohrverbindungsstückes angreifen, das in der die Pumpe mit dem Verbraucher verbindenden Leitung vorgesehen ist.

Zweckmäßig kann die schleifenförmige Leitung als Metallrohr oder aus flexiblem Werkstoff ausgebildet sein.

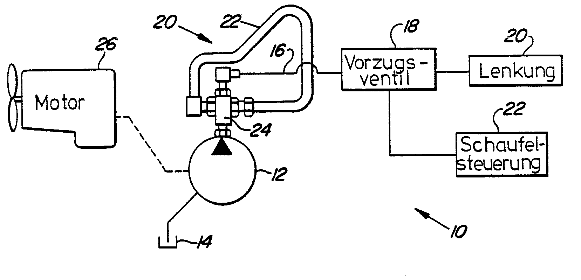

In der Zeichnung ist ein nachfolgend näher erläutertes Ausführungsbeispiel der Erfindung dargestellt.

In der einzigen Figur der Zeichnung bezeichnet 10 ein typisches Hydrauliksystem für ein Fahrzeug mit einer Pumpe 12, deren Einlaß an einen Sammelbehälter 14 und deren Auslaß an eine Leitung 16 angeschlossen ist. Die Leitung 16 wiederum führt zu einem Vorzugsventil 18, das den Flüssigkeitsfluß zu einem bevorrechtigtem Verbraucher 20 in Form einer Steueranlage bzw. Lenkung und zu einem nicht bevorrechtigten Verbraucher 22 in Form einer Schaufelsteuerung leitet.

An die Leitung 16 ist ferner ein Dämpfungsglied 20 angeschlossen. Dieses hat die Form eines schleifenförmigen Schlauches oder einer schleifenförmigen Leitung 22, deren gegenüberliegende Enden mit der Leitung 16 an Stellen verbunden sind, die sich diametral gegenüber- bzw. in der Sehlinie liegen. Ein Kreuzrohrverbindungsstück 24 ist hierzu in der Leitung 16 vorgesehen, wobei ein stromaufwärts und ein stromabwärts gelegener Abschnitt der Leitung 16 mit einem ersten Satz zueinander ausgerichteter Anschlußstücke und die sich gegenüberliegenden Enden des Dämpfungsgliedes 20 mit einem zweiten Satz zueinander ausgerichteter Anschlußstücke verbunden sind.

Die Pumpe 12 kann mit unterschiedlichen Drehzahlen von einem in seiner Drehzahl variierbaren Motor 26 aus angetrieben werden und ist herkömmlicher Bauart mit sich vergrößernden und verkleinernden Zylindervolumen, wodurch abgemessene Flüssigkeitsmengen in die Leitung 16 gedrückt werden und somit Druckstöße oder Druckwellen entstehen, die in die Flüssigkeit in der Leitung 16 induziert werden.

Wäre das Dämpfungsglied 20 nicht vorgesehen, so würden die Druckstöße bzw. Druckwellen von den einzelnen hydraulischen das Hydrauliksystem bildenden Komponenten empfangen und Geräusche verursachen. Andererseits dient das Dämpfungsglied 20 als ein ausdehnbarer Raum oder

2

**0 150 044**

als eine Volumenexpansionsvorrichtung, die die Geräusche erzeugende Energieleitung in dem Hydrauliksystem dadurch reduziert, daß die Energie in Richtung auf ihre Quelle zurückgeworfen wird. Dadurch wirkt das Dämpfungsglied 20 über den gesamten Bereich der Energiestoßfrequenzen.

## Patentansprüche

1. Dämpfungsglied (20) für ein hydraulisches System, in dem eine Pumpe (12) mit wenigstens einem Verbraucher (20 bzw. 22) über eine Leitung (16) verbunden ist, dadurch gekennzeichnet, daß die zwei Enden einer schleifenförmigen Leitung (22) an die die Pumpe (12) mit dem Verbraucher (20 bzw. 22) verbindende Leitung (16) derart angeschlossen sind, daß die zwei Enden gleichachsig und sich gegenüberliegend angeordnet sind.

2. Dämpfungsglied (20) nach Anspruch 1, dadurch gekennzeichnet, daß die Enden der schleifenförmigen Leitung (22) an den sich gegenüberliegenden Anschlußstücken eines Kreuzrohrverbindungsstückes (24) angreifen, das in der die Pumpe (12) mit dem Verbraucher (20 bzw. 22) verbindenden Leitung (16) vorgesehen ist.

3. Dämpfungsglied (20) nach Anspruch 1 oder 2, dadurch gekennzeichnet, daß die schleifenförmige Leitung (22) als Metallrohr ausgebildet ist.

4. Dämpfungsglied (20) nach Anspruch 1 oder 2, dadurch gekennzeichnet, daß die schleifenförmige Leitung (22) aus flexiblem Werkstoff ausgebildet ist.

## Claims

1. Damping device (20) for a hydraulic system in which a pump (12) is connected to at least one load (20 or 22) by way of a line (16), characterised in that the two ends of a loop formed pipe (22) are so connected to the line (16) connecting the pump (12) to the load (20 or 22) that the two ends are arranged coaxially and opposite one another.

2. Damping device (20) according to claim 1, characterised in that the ends of the loop formed pipe (22) engage with the oppositely disposed unions of a pipe connection cross piece (24) which is provided in the line (16) connecting the pump (12) to the load (20 or 22).

3. Damping device (20) according to claim 1 or 2, characterised in that the loop formed pipe (22) is formed as a metal tube.

4. Damping device (20) according to claim 1 or 2, characterised in that the loop formed pipe (22) is formed from flexible material.

## Revendications

1. Elément amortisseur (20) pour un système hydraulique dans lequel une pompe (12) est reliée à au moins un dispositif utilisateur (20 ou 22) par une conduite (16), caractérisé en ce que les deux extrémités d'une conduite (22) formant une boucle sont raccordées à la conduite (16) reliant la pompe (12) au dispositif utilisateur (20 ou 22) de telle façon que les deux extrémités sont disposées suivant le même axe et en opposition.

2. Elément amortisseur (20) selon la revendication 1, caractérisé en ce que les extrémités de la conduite (22) formant une boucle sont appliquées aux raccords opposés d'un connecteur à tubes croisés (24) qui est prévu dans la conduite (16) reliant la pompe (12) au dispositif utilisateur (20 ou 22).

3. Elément amortisseur (20) selon la revendication 1 ou 2, caractérisé en ce que la conduite (22) formant une boucle est réalisée sous la forme d'un tube métallique.

4. Elément amortisseur (20) selon la revendication 1 ou 2, caractérisé en ce que la conduite (22) formant une boucle est en matière flexible.

Motor

26

20
22
16

Vorzugsventil
18

Lenkung
20

24
12

Schaufelsteuerung
22

14

10